Europäisches Patentamt

European Patent Office

Office européen des brevets

(11) Veröffentlichungsnummer: **0 029 182**
**B1**

(12) # EUROPÄISCHE PATENTSCHRIFT

(45) Veröffentlichungstag der Patentschrift:
14.12.83

(51) Int. Cl.³: **C 01 B 33/02**

(21) Anmeldenummer: 80106838.8

(22) Anmeldetag: 06.11.80

(54) Semikontinuierliches Verfahren zur Herstellung von reinem Silicium.

(30) Priorität: 08.11.79 DE 2945070

(43) Veröffentlichungstag der Anmeldung:
27.05.81 Patentblatt 81/21

(45) Bekanntmachung des Hinweises auf die Patenterteilung:
14.12.83 Patentblatt 83/50

(84) Benannte Vertragsstaaten:
AT BE CH DE FR GB IT LI NL SE

(56) Entgegenhaltungen:
AT - A - 200 106
DE - C - 147 871
US - A - 2 904 405

ZEITSCHRIFT FÜR ANORGANISCHE UND
ALLGEMEINE CHEMIE, Band 286, 1956, Leipzig, DE, H.
v. WARTENBERG: "Schwefel-Thermitverfahren zur
Darstellung von Rein-Silicium", Seiten 247-253

(73) Patentinhaber: HELIOTRONIC Forschungs- und
Entwicklungsgesellschaft für Solarzellen-Grundstoffe
mbH, Johannes-Hess-Strasse 24, D-8263 Burghausen
(DE)

(72) Erfinder: Dietl, Josef, Dr. Dipl.-Phys., Am Bärenbach 17,
D-8262 Neuötting (DE)
Erfinder: Holm, Claus, Dipl.-Chem., Am Brunnen 1a,
D-8011 Baldham (DE)
Erfinder: Sirtl, Erhard, Prof. Dr. Dipl.-Chem.,
Kiefernweg 11, D-8261 Marktl (DE)

## Semikontinuierliches Verfahren zur Herstellung von reinem Silicium

Gegenstand der Erfindung ist ein semikontinuierliches Verfahren zur Herstellung von reinem Silicium aus Quarzsand durch Reduktion mit Aluminium.

Beim klassischen Verfahren zur Herstellung von Reinstsilicium für elektronische Bauelemente wird Rohsilicium aus der Reduktion von Quarz mit Kohle durch Chlorwasserstoff in Trichlorsilan umgewandelt. Aus diesem Trichlorsilan wird nach der Destillation und Reduktion mit Wasserstoff auf erhitzten Trägerkörpern hochreines polykristallines Silicium abgeschieden. Eine weitere Reinigung und Umwandlung in einkristallines Material lässt sich nachfolgend durch Tiegelziehen nach Czochralski oder tiegelfreies Zonenschmelzen erzielen.

Für eine Massenproduktion von billigen terrestrischen Solarzellen auf Basis Silicium ist eine derartige Verfahrensweise aber viel zu teuer und zu energieintensiv. Auch ist für die Herstellung von Solarzellen aus polykristallinem Silicium mit Verunreinigungen getternden Korngrenzen eine Reinheit, wie sie für elektronische Bauelemente zwingend ist, nicht unbedingt erforderlich.

Aus der Literatur sind zwar andere Ansätze zur Herstellung von Silicium aus Quarz bekannt, sie wurden aber nie bis zu einem, gegenüber dem beschriebenen klassischen Lichtbogen-Verfahren konkurrenzfähigen Verfahren weiterentwickelt.

So werden gemäss dem im Chemischen Zentralblatt 75, Seite 64, Nr. 147 871 (1904) beschriebenen Verfahren von K.A. Kühne Aluminiumspäne und/oder Aluminiumpulver mit Schwefel und Quarz vermischt und mit einer Zündpille zur Entzündung gebracht. Die Mischung fängt an zu brennen und schmilzt unter Weissglut zu einer dünnkochenden Masse zusammen, welche aus «Schwefelaluminium» besteht und in welcher sich nach dem Erkalten Kristalle von Silicium eingebettet finden.

Dieses, auch als Schwefel-Thermitverfahren bekannte Verfahren zur Herstellung von Silicium aus Quarz durch Reduktion mit Aluminium in Gegenwart von Aluminiumsulfid wurde von H.v. Wartenberg weiterentwickelt, lieferte aber auch dann lediglich Silicium in einer Ausbeute von 50% der Theorie. Selbst nach Reinigung «durch Schmelzen in Siliciumtetrachlorid» verblieb noch ein Gehalt von 0,1% Metallverunreinigungen, so dass das Material, selbst nach Eingeständnis des Herstellers, an der unteren Grenze der Brauchbarkeit lag (Zeitschrift für anorganische Chemie 286, 247–253 (1956)).

Der Erfindung lag daher die Aufgabe zugrunde, ein grosstechnisch einsetzbares Verfahren anzugeben, welches ausgehend von Quarz die Herstellung von reinem Silicium für Solarzellen unter Vermeidung der kostspieligen Gasphasenabscheidung erlaubt.

Gelöst wird diese Aufgabe durch ein Verfahren, welches dadurch gekennzeichnet ist, dass in ein neben Aluminium schmelzflüssiges Aluminiumsulfid enthaltendes, während der Reaktion auf Temperaturen von 900 bis 1050 °C gehaltenes, geschlossenes Reaktionsgefäss chargenweise Quarz eingerührt wird, wobei die eingerührte Chargenmenge Quarz 20 bis 40 Gew.-%, bezogen auf Aluminiumsulfid, beträgt, und dass das sich mit dem entstehenden elementaren Silicium anreichernde Aluminium nach Abklingen der Reduktion abgezogen, bis auf minimal 600 °C langsam abgekühlt, von sich ausscheidendem Silicium abgetrennt und anschliessend dem Reaktionsbehältnis wieder zugeführt wird, während das aus der Reaktion stammende Aluminiumoxid aus der Aluminiumsulfidschmelze abgezogen, von anhaftender und dem Reaktionsbehältnis zurückzuführender Aluminiumsulfidschmelze abgetrennt und durch Schmelzelektrolyse wieder zu nachchargierbarem elementarem Aluminium, reduziert wird.

Der im Verfahren einsetzbare Quarz muss dabei nicht stückig zugegeben werden, wie etwa im Lichtbogen-Verfahren, sondern wird zweckmässig als Quarzsand mit Korngrössen von 0,1 bis 2 mm in das Reaktionsbehältnis eingeführt. Sind die Quarzsande stark verunreinigt, so empfiehlt es sich, diese bis auf eine Reinheit von 98%, vorzugsweise etwa 99,5%, vorzureinigen, da andernfalls die im Verfahren eingesetzten Aluminiumsulfidschlacken zu schnell erneuert werden müssen. Als Ausgangsmaterial lassen sich natürlich auch beispielsweise Kaolinite, diverse Glimmervarianten, Feldspäte oder Schichtsilikate nach geeigneter chemischer und physikalischer Aufarbeitung zu Siliciumdioxidpulver einsetzen.

Gemäss dem erfindungsgemässen Verfahren wird zunächst Aluminiumsulfid mit zweckmässig 10 bis 40 Gew.-%, vorzugsweise 20 bis 30 Gew.-%, Quarz und/oder Aluminiumoxid, vorteilhaft im Verhältnis 1 : 2 bis 2 : 1 zusammen mit Aluminium in einem geschlossenen Reaktionsbehältnis aus beispielsweise Graphit vorgelegt. Die Quarz und/oder Aluminiumoxidzuschläge dienen dabei vor allem der Schmelzpunktserniedrigung des Aluminiumsulfids (Schmelzpunkt ca. 1100 °C), um die Reaktion bei Temperaturen von 900 bis 1050 °C, vorzugsweise 950 bis 1000 °C, durchführen zu können, da andernfalls beim Überschreiten der Temperatur im Reaktor über 1100 °C eine Nebenreaktion, die zu Siliciummono- und Siliciumdisulfid führt, gefördert wird. Derartige Siliciumsulfide würden aus dem System abdampfen und sich an kälteren Stellen der Anlage niederschlagen. Die Untergrenze von 900 °C ergibt sich aus dem Schlackensystem, welches bei tieferen Temperaturen fest wird. Diese Untergrenze lässt sich nur dann unterschreiten, wenn weitere schmelzpunktserniedrigende Zusätze, wie beispielsweise sulfidische oder halogenidische Zusätze, insbesondere Fluoride oder Sulfide der Alkali- und Erdalkalielemente dem Schlackensystem zugesetzt werden. Das Aluminium, welches zweckmässig vor der Schlacke eingebracht wird, sowie die Schlacke selbst, kann schmelzflüssig zugesetzt oder erst im Reaktor auf die angegebenen Arbeitstemperaturen aufgeheizt werden. Bei der Mengendiskussion ist hinsichtlich des Aluminiums dessen Doppelfunktion im erfindungsgemässen Verfahren zu berücksichtigen: Einerseits dient es dazu, Siliciumdioxid zu elemtarem Silicium zu reduzieren, anderseits aber auch als Lösungsmittel für das solcherart entstehende Silicium. Das optimale Gewichtsverhältnis Schlacke zu Aluminiumschmelze sollte 3 : 1 Gewichtsanteile betragen, da bei anteilig grösseren Aluminiummengen das Verfahren weniger effizient wird. Es ist nämlich von Vorteil, möglichst viel Silicium aus möglichst wenig Aluminiumschmelze zu kristallisieren, nicht nur weil es andernfalls kostspielig ist, das System noch auf Temperatur zu halten, sondern weil auch entsprechend grössere Reaktionsbehältnisse erforderlich würden.

Die Quarzzugabe im Verfahren wird so bemessen, dass die Schlacke immer einen Gehalt von mindestens etwa 10 Gew.-% Siliciumdioxid enthält und das Silicium aus dem verbleibenden Rest nach Reduktion durch Aluminium von Restaluminium noch gelöst wird. Die eingerührte Chargenmenge Quarz beträgt allgemein in der besonders günstigen Ausführungsform des Verfahrens 20 bis 40 Gew.-%, bezogen auf Aluminiumsulfidschlacke. Die Mindest- und Höchstgehalte der Aluminiumphase an Silicium ergeben sich im wesentlichen aus dem Phasendiagramm und der Tatsache, dass durch die Reduktion verbrauchtes Aluminium durch Zugabe reinen Aluminiums ausgeglichen werden muss. Wird beispielsweise bei einer Temperatur von 1000 °C gearbeitet, so nimmt die Aluminiumphase Silicium bis maximal etwa 45 Atom% auf, während es nach dem Abkühlen in der Kristallisationskammer auf beispielsweise 600 °C nur noch einen Restgehalt von etwa 12 Atom% Silicium aufweist (vgl. Hansen, «Constitution of Binary Alloys», 2. Edition, McGraw Hill Book Company, Inc., New York 1958, Seite 133). Beim Rückführen des Aluminiums in das Reaktionsbehältnis reduziert sich dieser Restgehalt dann noch zusätzlich im Masse der Nachchargierung von frischem Elektrolytaluminium.

Das Einbringen des Quarzsandes in das Reaktionsgefäss erfolgt zweckmässig vermittels eines geeigneten Rührers. Dieser Rührer soll zum einen den zugegebenen Quarz in die Schlacke einrühren, um eine Auflösung im Aluminiumsulfid zu erreichen und zweitens, zweckmässig in umgekehrter Laufrichtung, die Aluminiumphase in die Schlacke transportieren. Geeignet ist hierzu beispielsweise ein Flügelrührer, der aufgrund seiner Ausgestaltung eine der Schiffsschraube analoge Wirkungsweise zeigt. Der Rührer soll ausserdem vertikal verschiebbar sein, um anfangs in einer oberen Stellung den Quarz leichter einrühren und später in einer tieferen Stellung das Aluminium in die Schlackenschicht einwirbeln zu können. Als Material für einen derartigen Rührer eignet sich insbesondere Kohlenstoff bzw. Graphit.

In der sogenannten Reaktionsphase wird der Quarzsand durch einen derartigen Rührer in einer zentralen Stellung in der Schlackenschicht in diese eingerührt, während anschliessend nach der vollständigen Zugabe der jeweiligen Quarzcharge der Rührer zweckmässig in die Phasengrenze Schlacke/Aluminium abgesenkt wird und durch Drehen in der umgekehrten Richtung der Aluminiumsumpf aufgerührt und somit Aluminiumtröpfchen, die den Quarz reduzieren und das entstehende Silicium lösen, in der Schlackenphase dispergiert werden. Dies lässt sich durch Mischung vermittels Rühren problemlos realisieren, da die Dichten von Schlacke und Aluminium wenig unterschiedlich sind.

Aufgrund der Exothermie dieser Reduktion ist eine externe Beheizung, beispielsweise eine Widerstandsheizung oder Flammbeheizung bei feuerfester Tiegeleinfassung im wesentlichen nur beim Anfahren – also zum Aufschmelzen von Aluminium und Aluminiumsulfid – erforderlich, während in der Reaktionsphase die Temperaturführung im wesentlichen durch die Vertikalposition und Umdrehungszahl des Rührers bestimmt wird, da durch diese Massnahmen der Kontakt der Reaktanten massgeblich beeinflusst wird.

Die Reaktionsphase wird durch die Anreicherung des aus der Reduktion entstehenden Aluminiumoxids in der Schlacke bis auf maximal etwa 40 Gew.-% begrenzt, da ansonsten das System aufgrund des Ansteigens des Schmelzpunktes der Schlacke mit wachsendem Aluminiumoxidanteil einfriert.

Nachdem – wie bereits näher ausgeführt – die Reduktion stark exotherm verläuft, lässt sich der Reaktionsverlauf über Thermoelemente an verschiedenen Stellen in der Wand des Reaktionsbehältnisses leicht überwachen und steuern.

Nach dem Abklingen der Reduktion – erkenntlich an einem Absinken der Temperatur – schliesst sich der Reaktionsphase eine Beruhigungsphase an, der Rührer wird angehalten und ggf. aus der Schlacke nach oben ausgefahren, man lässt also die Aluminiumtröpfchen mit dem gelösten Silicium aus der Schlackenphase in den Metallsumpf absinken, während auskristallisiertes Aluminiumoxid in der Schlacke an die Oberfläche aufsteigt.

Am Ende der Beruhigungsphase, also nach Auftrennung von Schlacke und Aluminiumsumpf wird die Aluminiumschmelze, enthaltend etwa 40 Atom% Silicium, abgezogen und in eine Kristallisationskammer überführt. Hier wird die Temperatur langsam, zweckmässig mit etwa 0,5 bis 3 °C pro Minute, bis auf minimal 600 °C (Temperatur des Eutektikums 577 °C!), vorzugsweise 650 bis 700 °C, abgesenkt. Anschliessend wird das Gemisch aus dem Tiegel, in welchem es abgekühlt wurde vorzugsweise in eine beheizbare Zentrifuge gegeben, in welcher das flüssige Aluminium abgeschleudert wird. Der Schleuderkorb sowie der Tiegel zum Auskristallisieren können aus Keramik oder Kohlenstoff bestehen, der Schleuderkorb auch aus Stahl. Eine andere Möglichkeit zum Auftrennen des Gemisches besteht darin, die auskristallisierten Siliciumplättchen mit beispielsweise Quarzwolle abzufiltrieren. Die nach dem einen oder anderen Verfahren abgetrennten Siliciumplättchen werden nach dem Abkühlen zum Entfernen des Restaluminiums beispielsweise mit verdünnter, wässriger Salzsäure oder Alkohol gereinigt, wobei bei letztgenannter Methode bei Verwendung von Ethanol als Umsetzungsprodukt wohlfeiles Aluminiumethylat entsteht. Um auch noch eingeschlossenes Aluminium abzutrennen, empfiehlt es sich, die Siliciumplättchen auf etwa 50 μm zu mahlen und erneut mit verdünnter Salzsäure oder Alkohol auszulaugen, wodurch der Aluminiumgehalt auf etwa 400 bis 600 Gew.-ppm abgesenkt werden kann, entsprechend etwa der maximalen Löslichkeit des Aluminiums in Silicium bei der Ausscheidungstemperatur. Ein derartiger Aluminiumpegel im Silicium lässt sich bei einigen polykristallinen Solarzellentypen bereits als Grunddotierung tolerieren, während andernfalls der Aluminiumgehalt durch bekannte Methoden, wie beispielsweise Schlackenreinigung, Segregation durch gerichtete Erstarrung oder Ausdampfung im Vakuum, allein oder in Kombination, weiter reduziert werden kann. Wird beispielsweise die Schlackenreinigung angewandt, bei welcher das Silicium in eine Extraktionsschmelze, bestehend beispielsweise aus Erdalkalisilikaten und/oder Erdalkalifluoriden, eingebracht wird, so kann auf die vorherige Auslaugung mit Salzsäure oder Alkohol auch verzichtet werden.

Das abgetrennte Aluminium weist abhängig von der Temperatur, auf welche es zum Auskristallisieren des Siliciums abgekühlt wurde, noch einen Silicium-Restgehalt in der Grössenordnung von 15 bis 20 Atom% auf, der aber nicht verlorengeht, da es anschliessend in den Reaktor zusammen mit reinem Elektrolytaluminium zum Ausgleich des zu Aluminiumoxid im Verfahren oxidierten Anteils, zurückgeführt wird und dort wieder neues Silicium aus der Reduktion aufnimmt.

Nach Beendigung des Rührens nimmt in der Beruhigungsphase die Durchmischung und somit die Reaktionsgeschwindigkeit ab, wodurch gleichlaufend die Temperatur in der Schlacke abnimmt und Aluminiumoxid aus der Reduktion sich ausscheidet. Das sich ausscheidende Aluminiumoxid wird bei einer Temperatur der Schlacke, bei welcher diese noch schmelzflüssig ist, abgeschöpft und in eine Aluminiumoxidabscheidekammer überführt. Eine weitere Möglichkeit besteht darin, die Schlackenschicht ganz oder teilweise in eine Aluminiumoxidabscheidekammer zu überführen und nach Absenkung der Temperatur bis knapp über den Schmelzpunkt der Schlacke diese durch Abzentrifugieren oder Filtration durch ein geeignetes Quarzfilter von dem Aluminiumoxid abzutrennen und dem Reaktor zu einem erneuten Reduktionszyklus zuzuführen. Diese rückgeführte Aluminiumsulfidschlacke enthält neben Siliciumdioxid noch etwa 15 bis 20 Gew.-% Aluminiumoxid entsprechend der Löslichkeit von Aluminiumoxid in Aluminiumsulfid bei der entsprechenden Temperatur. Die Verunreinigungen des eingesetzten Quarzsandes werden durch die Schlacke im wesentlichen in sulfidische Verbindungen umgewandelt, die zum Teil aus dem System abdampfen. Hat sich aber dennoch – abhängig von der Reinheit des eingesetzten Quarzgutes – die Schlacke mit Verunreinigungen zu stark angereichert, so wird die gesamte Schlacke verworfen und frisches Aluminiumsulfid mit entsprechenden Quarz- und/oder Aluminiumoxidzuschlägen eingesetzt.

Das in der Aluminiumoxidabscheidekammer abgetrennte Aluminiumoxid wird anschliessend zur Rückgewinnung von Aluminium der Reduktion, also beispielsweise der klassischen Schmelzelektrolyse in geschmolzenem Kryolith, unterworfen. Das resultierende reine Aluminium wird dann anteilmässig wieder dem aus der Siliciumkristallisation in den Reaktor zurückgeführten Aluminium zugeschlagen.

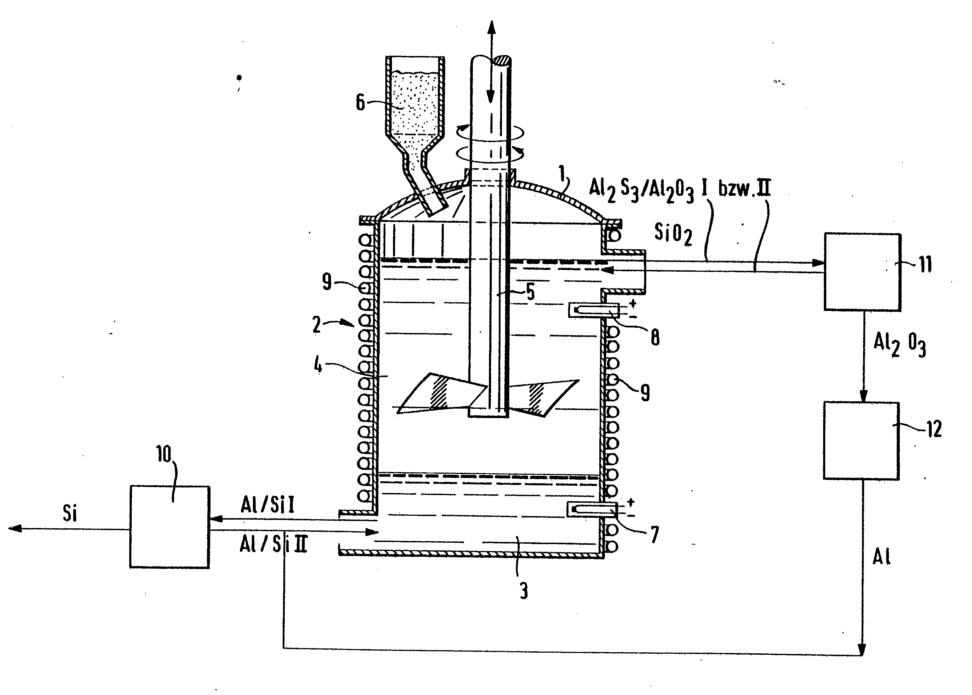

In der Abbildung ist der Kreisprozess nochmals schematisch dargestellt: In das mit einem Deckel 1 verschlossene Reaktionsbehältnis 2 wird Aluminium 3 und überstehende Aluminiumsulfidschlacke 4 vorgelegt. Durch den vertikal verstellbaren Rührer 5 wird über eine Zuführung 6 Quarzsand in die Schlacke 4 eingerührt und anschliessend durch Umkehrung der Drehrichtung und Absenkung des Rührers die Aluminiumphase in die Schlacke aufgewirbelt, wobei über Temperaturmessfühler 7 und 8 der Reaktionsverlauf überwacht und die Stellung sowie die Umdrehungszahl sowie ggf. die externe Heizung 9 gesteuert wird. Nach Abklingen der Reaktion wird der Aluminiumsumpf in eine Kristallisationskammer 10 abgezogen, abgekühlt und nach Abtrennung des auskristallisierten Siliciums zusammen mit noch gelöstem Silicium in den Reaktor 2 zurückgeführt. Währenddessen wird ausgeschiedenes Aluminiumoxid zusammen mit Aluminiumsulfidschlacke und darin gelöstem Quarz in eine Aluminiumoxidabtrennkammer 11 überführt und von der Schlacke 4 abgetrennt und der Schmelzelektrolyse 12 zugeführt, aus welcher rückgewonnenes Aluminium anteilmässig wieder dem Aluminiumsumpf 3 des Reaktors 2 zugeschlagen wird. Die nach der Abtrennung von ausgeschiedenem Aluminiumoxid verbleibende und noch Aluminiumoxid und Siliciumdioxid enthaltende Aluminiumsulfidschlacke wird ebenfalls dem Reaktor wieder zugeführt, bevor über die Zuführung 6 eine neue Charge Quarzgut in den Reaktor 2 eingebracht wird.

Beispiel

Als Reaktionsbehältnis wurde ein Kohletiegel mit Deckel verwendet, welcher mit einer Durchführung für einen Schraubenrührer aus Graphit versehen war.

Dieser Tiegel wurde mit 7,9 kg Aluminium (Reinheit 99,9%), 18 kg Aluminiumsulfid (Reinheit 99,9%), 3,5 kg Korundpulver (Reinheit 99,9%) sowie 6 kg Quarzsand (Reinheit 99,9%, Körnung 0,1 bis 0,5 mm) gefüllt und unter Schutzgas (Stickstoff/Argon) vermittels einer den Tiegel umgebenden Strahlungsheizung aufgeschmolzen und auf einer Temperatur von 1050 °C gehalten. Unter Rühren mit einer Geschwindigkeit von durchschnittlich 100 U./min wurden innerhalb einer Stunde weitere 6,5 kg Quarzsand obiger Spezifikation eingerührt. Anschliessend wurde der Rührer in die Phasengrenze Schlacke/Aluminiumsumpf abgesenkt und der Drehsinn umgekehrt. Die externe Heizung wurde dabei abgeschaltet und es wurde mit einer Geschwindigkeit von 100 bis 150 U./min gerührt, wodurch die Temperatur innterhalb 1000 bis 1050 °C weitgehend konstant gehalten werden konnte. Nachdem die Temperatur trotz Rührens nach ca. 30 Minuten abzusinken begann, wurde der Rührer nach oben aus dem System ausgefahren. Nach Absinken der Temperatur auf 950 °C wurde der Aluminiumsumpf abgestochen und in einem weiteren Kohletiegel innerhalb 4 Stunden auf 700 °C abgekühlt. Anschliessend wurden die auskristallisierten Siliciumplättchen auf einem Filter aus gepresster Quarzwolle abfiltriert und mit 20 gewichtsprozentiger, wässriger Salzsäure gewaschen. Nach dem Abfiltrieren wurden die Siliciumplättchen in einer Kugelmühle aus Wolframcarbid auf eine durchschnittliche Teilchengrösse von ca. 50 µm zerkleinert und erneut mit verdünnter wässriger Salzsäure gewaschen. Nach dem neuerlichen Abfiltrieren und Säurefreiwaschen resultierten 2 kg Silicium nachstehender, mit einem Atomabsorptionsspektrometer bestimmter Analysenwerte: weniger als 600 Gew.-ppm Aluminium, sowie Eisen, Calcium und Kupfer unterhalb der Nachweisgrenze. Kolorimetrisch wurde der Gehalt an Bor und Phosphor mit 2 Gew.-ppm bzw. 0,2 Gew.-ppm bestimmt.

Für einen zweiten Zyklus wurde das noch einen Gehalt von ca. 20 Atom% Silicium enthaltende schmelzflüssige Aluminium dem Reaktor wieder zugeführt, desgleichen die noch ca. 20 Gew.-% Aluminiumoxid und ca. 20 Gew.-% Siliciumdioxid enthaltende Aluminiumschlacke, aus welcher das aus der Reduktion stammende Aluminiumoxid bis auf den angegebenen Restgehalt ebenfalls entfernt worden war.

Nach Zusatz von 2,6 kg Aluminium wurden 4,3 kg Quarzsand eingerührt und entsprechend dem ersten Zyklus verfahren. Es fielen wiederum 2 kg Silicium mit obigen Analysenwerten an. Die zur Erzielung der gleichen Menge Silicium reduzierte Quarzmenge ergibt sich daraus, dass das zum Lösen des anfallenden Siliciums erforderliche Aluminium aus dem ersten Zyklus noch ca. 20 Gew.-% Silicium enthält.

## Patentansprüche

1. Semikontinuierliches Verfahren zur Herstellung von reinem Silicium aus Quarz durch Reduktion mit Aluminium in Gegenwart von Aluminiumsulfid, dadurch gekennzeichnet, dass in ein neben Aluminium schmelzflüssiges Aluminiumsulfid enthaltendes, während der Reaktion auf Temperaturen von 900 bis 1050 °C gehaltenes, geschlossenes Reaktionsgefäss chargenweise Quarz eingerührt wird, wobei die eingerührte Chargenmenge Quarz 20 bis 40 Gew.-%, bezogen auf Aluminiumsulfid, beträgt, und dass das sich mit dem entstehenden elementaren Silicium anreichernde Aluminium nach Abklingen der Reduktion abgezogen, bis auf minimal 600 °C langsam abgekühlt, von sich ausscheidendem Silicium abgetrennt und anschliessend dem Reaktionsbehältnis wieder zugeführt wird, während das aus der Reaktion stammende Aluminiumoxid aus der Aluminiumsulfidschmelze abgezogen, von anhaftender und dem Reaktionsbehältnis zurückzuführender Aluminiumsulfidschmelze abgetrennt und durch Schmelzelektrolyse wieder zu nachchargierbarem elementarem Aluminium reduziert wird.

2. Verfahren nach Anspruch 1, dadurch gekennzeichnet, dass das Silicium enthaltende Aluminium mit einer Geschwindigkeit von 0,5 bis 3°C pro Minute abgekühlt wird.

3. Verfahren nach Anspruch 1 oder 2, dadurch gekennzeichnet, dass zur Abtrennung des aus der Reaktion stammenden Aluminiumoxids von anhaftender und dem Reaktionsbehältnis zurückzuführender Aluminiumsulfidschmelze eine Temperatur von 950 bis 900 °C eingestellt wird.

4. Verfahren nach einem oder mehreren der Ansprüche 1 bis 3, dadurch gekennzeichnet, dass die Einbringung des Quarzes durch einen schraubenförmigen Rührer erfolgt, dessen Umdrehungsrichtung nach der vollständigen Zugabe der jeweiligen Quarzcharge umgekehrt wird.

5. Verfahren nach Anspruch 4, dadurch gekennzeichnet, dass unter Ausnutzung der Wärmetönung der Reaktion die Temperaturführung durch die Vertikalposition und Umdrehungszahl des Rührers bestimmt wird.

## Claims

1. A semi-continuous process for the manufacture of pure silicon from quartz by reduction with aluminium in the presence of aluminium sulfide, characterized in that into a closed reaction vessel maintained at temperatures of from 900 to 1050 °C during the reaction and containing molten aluminium sulfide in addition to aluminium, quartz is stirred in batch-wise, the quantity of quartz which is stirred in being from 20 to 40% by weight, based on the aluminium sulfide, and in that the aluminium, enriched by the elemental silicon that forms, is removed after the reduction has ceased, is slowly cooled to a minimum temperature of 600 °C, is separated from adhering aluminium sulfide melt that is to be returned to the reaction vessel, and is again reduced, by melt electrolysis, to reusable elemental aluminium.

2. A process according to claim 1, characterized in that the silicon-containing aluminium is cooled at a rate of from 0,5 to 3 °C per minute.

3. A process according to claim 1 or 2, characterized in that a temperature of 950 to 900 °C is set for separating aluminium oxide formed during the reaction from adhering aluminium sulfide melt that is to be returned to the reaction vessel.

4. A process according to any one or more of claims 1 to 3, characterized in that the quartz is introduced by a screw-type stirrer, the direction of rotation of which is reversed after each quartz charge has been completely added.

5. A process according to claim 4, characterized in that the temperature control is determined by the vertical position and rate of revolution of the stirrer while using the heat from the reaction.

## Revendications

1. Procédé semi-continu de préparation de silicium pur à partir de quartz par réduction par l'aluminium en présence de sulfure d'aluminium, caractérisé en ce que l'on introduit sous agitation des charges discontinues de quartz dans un réacteur fermé, maintenu pendant la réaction à des températures de 900 à 1050°C, contenant outre l'aluminium du sulfure d'aluminium à l'état fondu, la quantité de quartz introduite sous agitation étant de 20 à 40% poids rapportée au sulfure d'aluminium, et en ce que l'aluminium, dans lequel s'enrichit le silicium élémentaire formé, est extrait après l'arrêt de la réduction, refroidi lentement jusqu'à une température minimale de 600°C, séparé du silicium qui se dépose et enfin renvoyé au réacteur, tandis que l'oxyde d'aluminium formé par la réaction est extrait du bain de sulfure d'aluminium, séparé du sulfure d'aluminium adhérent et destiné à être renvoyé au réacteur, et réduit par électrolyse ignée en de l'aluminium élémentaire pouvant de nouveau être introduit par charges discontinues.

2. Procédé selon la revendication 1, caractérisé en ce que l'aluminium contenant le silicium est refroidi à une vitesse de 0,5 à 3°C par minute.

3. Procédé selon l'une des revendications 1 et 2, caractérisé en ce que, pour séparer l'oxyde d'aluminium provenant de la réaction du bain de sulfure d'aluminium adhérent et destiné à être renvoyé au réacteur, on applique une température de 950 à 900°C.

4. Procédé selon l'une quelconque des revendications 1 à 3, caractérisé en ce qu'on introduit le quartz par un agitateur hélicoïdal dont on change le sens de rotation après la fin de l'addition de chacune des charges de quartz.

5. Procédé selon la revendication 4, caractérisé en ce que, exploitant la chaleur libérée par la réaction, on règle l'évolution de la température par la position en hauteur de l'agitateur et par sa vitesse de rotation.

0 029 182